# FASCICULE DE BREVET EUROPEEN

(11) **EP 0 725 020 B1**
(45) Date de publication et mention de la délivrance du brevet: **03.05.2000**
(21) Numéro de dépôt: 96400195.2
(22) Date de dépôt: 26.01.1996
(51) Int. Cl.: B65D 90/18, B65D 90/14, B62B 5/00

(54) **Système pour le roulage directif d'une lourde charge**
System zum lenkbaren Rollen einer Schwerlast
System for the directional carriage of a heavy load

(30) Priorité: 31.01.1995 FR 9501100
(43) Date de publication de la demande: 07.08.1996
(73) Titulaire: AEROSPATIALE MATRA, 75016 Paris (FR)
(72) Inventeur: Bousquet, Jean-Claude, F-18000 Bourges (FR); Vergne, Jean-Pierre, F-18230 Saint-Doulchard (FR); Foltier, Didier, F-18390 Savigny en Septaine (FR)
(74) Mandataire: Rinuy, Santarelli

(56) Documents cités:
- FR-A- 1 558 018
- FR-A- 2 030 235
- FR-A- 2 707 277
- GB-A- 827 227
- US-A- 3 147 989
- US-A- 3 570 694

## Description

L'invention concerne le roulage directif d'une charge telle qu'un conteneur ou un plateau porte-matériel, destinée à être déplacée entre des zones en lesquelles elle doit en principe reposer directement, sans l'intermédiaire de roues, et dans une position bien précise. Elle concerne plus particulièrement la manutention de conteneurs de masse élevée (typiquement de l'ordre de quelques centaines de kilos à quelques tonnes ; en pratique entre 300 kg et 2.500 kg), contenant par exemple des engins tactiques à accrocher sous un avion.

Les moyens de manutention actuellement connus pour le déplacement, manuel (par la force humaine) ou non, de conteneurs se composent habituellement de deux modules ou trains de roulage, respectivement montés à l'avant et à l'arrière du conteneur, qui permettent à la fois de supporter et de déplacer ce dernier.

Dans une configuration classique, l'un des modules est directif, tandis que l'autre est rigide. De ce fait, au cours des déplacements et surtout lors de l'approche finale pour la mise à poste du conteneur dans une position de consigne précise (par exemple sous une portion d'aéronef à laquelle on veut fixer le contenu du conteneur), il est nécessaire d'effectuer de très nombreuses manoeuvres avec de multiples braquages (ces manoeuvres sont d'autant plus nombreuses que le rayon de braquage est grand, du fait que l'angle de braquage est en pratique très inférieur à 90°). Il en résulte une mise en place longue et laborieuse.

D'autre part, le déplacement de conteneurs et charges dans des lieux divers (par exemple soutes, hangars, ascenseurs, pont d'envol sur porte-avions) avec passages d'obstacles (notamment rampes, rainures, brins d'arrêt, etc.) nécessite en pratique divers moyens spécifiques de manutention pour opérer en conformité avec les normes requises de sécurité. En particulier, il est nécessaire d'assurer la stabilité (empêcher tout basculement (ce qui conduit à limiter l'angle de braquage)) et de préférence l'immobilisation de la charge en cours de roulage en cas de défaillance des opérateurs. Le besoin se fait en outre sentir d'avoir des matériels polyvalents (c'est-à-dire aptes à coopérer avec plusieurs types de charges) afin de réduire le nombre total de moyens de manutention à garder à disposition pour une gamme donnée de charges à manipuler.

L'invention a ainsi pour objet un train amovible polyvalent (adaptable à plusieurs types et géométries de charges), d'encombrement et de masses minimum, pour le roulage directif d'une charge éventuellement lourde (jusqu'à 2.500 kg en pratique), qui soit adapté à coopérer de manière simple et rapide avec cette charge en ses extrémités, en vue de son verrouillage, puis de son soulèvement et de son roulage, qui autorise un grand angle de braquage (supérieur à 90°, permettant en particulier un déplacement rigoureusement transversal) grâce à la mise en oeuvre d'un timon dont l'angle de manoeuvre soit lui aussi supérieur à 90°, qui ne nécessite qu'un faible soulèvement pour le roulage, mais avec possibilité de réglage en hauteur (typiquement entre 5 et 130 mm), tout en garantissant une bonne stabilité de cette charge en cours de roulage même en configuration de braquage maximum (y compris dans l'hypothèse où cette charge serait munie en chacune de ses extrémités d'un train amovible de roulage directif qui tous deux seraient en configuration de braquage maximum), qui admette avantageusement un système d'immobilisation soit en position de roulage (charge à l'arrêt) soit en cas de défaillance de l'opérateur (chute par exemple ; on parle couramment d' "homme mort"), et ce avec une structure simple et robuste dont la mise en oeuvre soit simple et aisée en toute sécurité, éventuellement par du personnel non spécialisé et peu nombreux, même dans des espaces réduits. L'invention a pour objet subsidiaire un assemblage aisé des trains amovibles pour leur transport à vide entre deux lieux d'utilisation, ainsi qu'un stockage aisé dans un faible volume.

On connaît déjà un dispositif de transport manuel vendu par la Société MANUTAN (Paris - France) sous la désignation de "transpalette" comportant un châssis formé d'une fourche dont les deux branches se terminent par des galets et dont la base est montée sur une paire de roues directrices orientées par un timon. Les deux branches de la fourche se glissent sous la charge puis un vérin soulève la fourche et la charge de quelques centimètres. Cette solution exige qu'un espace existe pour le passage des branches de la fourche (c'est surtout selon une direction transversale qu'il est le plus facile de prévoir cet espace). Cette solution ne permet pas d'arrimage en bout de charge, ni un soulèvement suffisant pour le franchissement de petits obstacles, ni un braquage supérieur à 90°, ni un tractage motorisé, ni un blocage en cas d'incident.

On connaît également des trains rouleurs pivotants constitués de plateaux montés sur une pluralité de galets et orientés à l'aide de timons. Ces trains sont encore moins satisfaisants puisqu'aucun soulèvement n'est prévu (il faut donc un dispositif complémentaire pour le soulèvement).

On connaît aussi des dispositifs appelés timons verrouillables, comportant en fait des essieux commandés en orientation par un timon et comportant une tête adaptée à se verrouiller par en dessous à un plateau supportant le charge. Ces dispositifs perdent toute stabilité lorsque l'angle de braquage approche de 90°.

On connaît également d'après les documents FR-2.597.807 et FR-A.2.647.731, un dispositif de manutention-roulage destiné à être monté sur roues et adapté à soulever une extrémité d'un conteneur en vue de son roulage. Le dispositif comporte un tablier muni de moyens pour sa fixation amovible à une face du conteneur, un châssis monté sur un essieu articulé autour d'un axe vertical, un chariot coulissant le long de ce châssis et articulé au tablier et un système à vérin articulé au tablier et au châssis pour contrôler leur inclinaison relative. En fonctionnement, on accroche ce dispositif au conteneur, puis on active le système à vérin en sorte de soulever l'extrémité du conteneur puis de faire glisser sous cette extrémité la partie du châssis à laquelle est articulé l'essieu.

Il apparaît que ce dispositif ne satisfait pas au problème technique précité dans la mesure où tout d'abord la mise en oeuvre d'essieux articulés autour d'un axe vertical n'autorise pas un grand angle de braquage à moins de mettre en péril la stabilité du conteneur (plus on fait tourner son essieu plus on risque de basculer transversalement). D'autre part, rien n'est prévu pour garantir une immobilisation en cas de défaillance des opérateurs en cours de roulage. De plus, les articulations entre le châssis et le tablier, qui sont fortement sollicitées lors des opérations de soulèvement et de dépose, nuisent à la fois à la rigidité et à la robustesse de l'ensemble. Il n'y a pas de réglage en hauteur.

Le document US-4.570.959 divulgue un chariot de roulage comportant une structure verticale adaptée en partie basse à se fixer à un conteneur léger, un châssis articulé sur cette structure verticale et porté par un essieu, et un vérin incliné, articulé à la structure verticale et au châssis, dont l'allongement ou la rétraction modifie l'angle entre ces derniers et provoque ainsi le soulèvement ou l'abaissement de la structure verticale en ses niveaux extrêmes. On retrouve les mêmes insuffisances que précédemment.

Le document DE-3.830.530 divulgue un dispositif articulé pour le transport de conteneurs, comportant des tiges verticales reliant des éléments de fixation destinés à coopérer avec les coins normalisés d'un conteneur. Les tiges sont liées à des bras sous lesquels sont montées des paires de roues dont l'orientation est commandée par une tringlerie en fonction de celle d'un timon ; les bras sont orientés longitudinalement (écartement minimal des paires de roues) ou transversalement (écartement maximal de ces dernières) et entre les tiges est montée une pièce pivotante de fixation qui est, selon les cas précités, horizontale ou verticale, avec deux modes différents de montage du timon sur cette pièce pivotante de fixation. Ce dispositif est destiné à permettre une sollicitation du conteneur aussi bien en poussée qu'en traction. Toutefois, il ne permet pas un braquage pouvant dépasser 90°, combiné à une grande robustesse et à une commande réglable en hauteur (rien de précis n'est en fait précisé dans ce document quant au soulèvement de la charge).

La demanderesse a déjà proposé, dans sa demande de brevet français FR-A-2.707.277 du 5 Juillet 1993, un dispositif pour le soulèvement, le roulage directif et la dépose d'une charge comportant :
- un train amovible comportant un châssis, un ensemble directeur et une barre orientable de manoeuvre, ce châssis comportant, en une partie avant, des moyens fixes d'ancrage incluant en partie haute des moyens de soulèvement et en partie basse de premiers moyens de butée et de verrouillage, cet ensemble directeur comportant deux roues directrices montées dans des chapes individuellement articulées sur le châssis autour d'arbres sensiblement verticaux décalés transversalement l'un par rapport à l'autre et un ensemble de biellettes adapté à maintenir en permanence le parallélisme des roues et incluant deux biellettes longitudinales articulées sur les chapes autour d'arbres sensiblement horizontaux et une biellette transversale articulée en ses extrémités aux biellettes longitudinales autour d'arbres sensiblement verticaux, et cette barre de manoeuvre étant munie d'une poignée de préhension destinée à un opérateur et étant articulée au châssis par une double articulation et à la biellette transversale autour d'un pivot sensiblement vertical, cette barre de manoeuvre et ce châssis étant en outre munis de moyens complémentaires de rigidification temporaire destinés à bloquer, à volonté, la barre de manoeuvre en une orientation prédéterminée vis-à-vis du châssis,
- une plaque d'ancrage comportant en partie haute des moyens de retenue et en partie basse de seconds moyens de butée et de verrouillage, ces moyens de retenue étant adaptés à coiffer par au-dessus les moyens de soulèvement, en sorte de former conjointement une articulation temporaire d'axe transversal, et déboîtable seulement par abaissement des moyens de soulèvement vis-à-vis des moyens de retenue, les premier et second moyens de butée et de verrouillage étant adaptés à coopérer en sorte de verrouiller, lorsque coopèrent les moyens de retenue et de soulèvement, le châssis et la plaque en une configuration dite de roulage, cette plaque d'ancrage étant destinée à être fixée à une extrémité de la charge à une hauteur telle que lorsque le châssis est dans ladite configuration de roulage, les moyens de soulèvement sont situés plus haut que les moyens de retenue.

Les caractéristiques essentielles du système analysé ci-dessus sont incluses dans le préambule de la revendication 1.

Toutefois cette solution ne répond pas non plus au problème technique indiqué ci-dessus puisqu'en particulier elle ne permet qu'un angle de manoeuvre de 70°, c'est-à-dire très inférieur à 90°, ni un verrouillage à la charge avant soulèvement, ni un réglage en hauteur, ni un verrouillage à un quelconque niveau donné ; le soulèvement nécessite un effort qui doit être maintenu le temps d'effectuer le verrouillage ; bien que cet effort soit simplifié par un effet de levier, il apparaît que, puisqu'il doit être appliqué manuellement, cet effort n'est suffisant (dans un contexte de sécurité raisonnable) que pour des charges d'au plus quelques centaines de kilos.

Il n'existe donc pas, à la connaissance de la demanderesse, de solution répondant actuellement au problème technique indiqué ci-dessous.

L'invention vise par contre à résoudre ce problème technique et propose un dispositif pour l'accrochage et le verrouillage, le soulèvement, le roulage directif, la dépose et la libération d'une charge, comportant, pour l'une au moins de deux extrémités de la charge décalées selon une direction longitudinale :
- un train amovible comportant un châssis normalement horizontal, deux ensembles roulants directeurs montés sous le châssis, en lui étant reliés par deux arbres verticaux rotatifs respectifs situés en deux positions décalées transversalement, un pivot vertical monté sur le châssis entre les arbres verticaux, un ensemble d'accouplement attelant en rotation et en synchronisme les arbres verticaux au pivot vertical, un timon de direction articulé sur le pivot autour d'un tourillon horizontal, des moyens adaptés à verrouiller de façon temporaire le timon en une configuration donnée vis-à-vis du pivot, un panneau transversal vertical monté coulissant verticalement à l'avant du châssis, un vérin vertical interposé entre une partie basse du châssis et une partie haute du panneau, deux doigts d'accrochage articulés à l'avant du panneau transversal vertical autour de tourillons horizontaux transversaux coaxiaux, des moyens amovibles de verrouillage en inclinaison pour verrouiller ces doigts dans chacune d'au moins deux configurations de travail d'inclinaison différentes autour de ces tourillons coaxiaux,
- deux organes d'accrochage fixés à ladite extrémité de la charge adaptés à coopérer simultanément avec lesdits doigts d'accrochage du train amovible dans l'une de leurs configurations de travail,
- des moyens amovibles d'assujettissement adaptés à solidariser temporairement lesdits organes d'accrochage auxdits doigts d'accrochage.

Selon des enseignements préférés de l'invention, éventuellement combinés :
- les deux arbres verticaux rotatifs respectifs des ensembles roulants directeurs, ainsi que le pivot vertical comportent des pignons attelés en rotation par ledit ensemble d'accouplement,
- ledit ensemble d'accouplement comporte deux séries symétriques de pignons de mêmes rapports de transmission, interposés entre le pignon du pivot et les pignons, identiques, des arbres verticaux,
- lesdites séries de pignons ont chacune un rapport de transmission égal à +1,
- lesdits pignons sont engagés dans une partie du châssis formant boîtier,
- l'un au moins des ensembles roulants directeurs est muni d'un sabot de freinage comportant une tige verticale coaxiale à l'arbre vertical dudit ensemble roulant directeur et montée verticalement coulissante vis-à-vis de cet arbre, et d'une pièce de commande de freinage, accessible à l'extérieur du châssis et adaptée à pousser temporairement la tige vers le bas par rapport à l'arbre,
- chacun des ensembles roulants directeurs est muni d'un sabot comportant une tige, une unique pièce de manoeuvre étant prévue pour pousser simultanément sur les deux tiges, constituée d'une traverse à laquelle sont fixées lesdites tiges,
- des éléments élastiques sont comprimés entre lesdits arbres et ladite traverse,
- le timon est articulé sur le pivot au moyen d'une chape, adaptée à être solidarisée au moins temporairement au timon, et coopérant avec la traverse en sorte de la solliciter vers le bas lorsque le timon descend sous une inclinaison donnée par rapport au sol,
- les ensembles roulants directeurs comportent chacun une seule roue et la tige verticale est montée à l'intérieur de l'arbre vertical,
- le timon est articulé sur le pivot par l'intermédiaire d'une chape sur laquelle le timon est articulé autour d'un second tourillon horizontal, des moyens de blocage étant prévus pour solidariser de manière temporaire, soit seulement le timon à la chape, soit seulement la chape au pivot, soit le timon à la chape et cette chape au pivot,
- ces moyens de blocage comportent de premiers perçages transversaux ménagés en regard dans le timon et la chape, de seconds perçages transversaux ménagés en regard dans la chape et le pivot, et des goupilles adaptées à s'engager dans ces premiers perçages et/ou dans ces seconds passages,
- des moyens de blocage sont prévus pour bloquer le panneau transversal vertical en au moins deux positions verticales vis-à-vis du châssis,
- le panneau transversal vertical est monté dans des glissières verticales situées aux extrémités latérales avant du châssis, et lesdits moyens de blocage comportent des goupilles adaptées à pénétrer à la fois dans des perçages horizontaux des glissières et des perçages horizontaux du panneau transversal vertical,
- les moyens amovibles de verrouillage en inclinaison comportent des goupilles adaptées à pénétrer à la fois dans des perçages horizontaux des doigts d'accrochage et dans des perçages horizontaux ménagés dans au moins un flasque vertical ménagé sur le panneau et sur lequel est fixé le tourillon horizontal dudit doigt,
- les doigts d'accrochage sont mobiles transversalement le long de leurs tourillons horizontaux,
- les doigts d'accrochage ont une configuration horizontale de travail et une configuration verticale de travail,
- chaque doigt d'accrochage coopère avec un organe d'accrochage par venue d'un barreau en butée au fond d'une fourche en une configuration où ce doigt et cet organe présentent des perçages transversalement en regard, les moyens amovibles d'assujettissement comportant des goupilles engagées à la fois dans lesdits perçages du doigt et de l'organe d'accrochage,
- la fourche est montée à l'extrémité du doigt d'accrochage tandis que le barreau fait partie de l'organe d'accrochage,
- le train amovible comporte lui-même, à l'opposé du panneau transversal vertical des organes d'accrochage, adaptés à coopérer avec les doigts d'accrochage d'un autre train amovible.

Des objets, caractéristiques et avantages de l'invention ressortent de la description qui suit, donnée à titre d'exemple non limitatif, en regard des dessins annexés sur lesquels :
- la figure 1 est une vue en élévation de côté d'un train amovible conforme à l'invention,
- la figure 1A est une vue similaire de ce train, représentant en éclaté le timon, la chape et le pivot,
- la figure 2 en est une vue de dessus, avec des doigts d'accrochage en configuration horizontale,
- la figure 3 en est une vue frontale, selon la flèche III de la figure 2,
- la figure 4 est une vue de détail montrant, en coupe verticale au travers d'un doigt d'accrochage, ce doigt disposé verticalement et une pièce d'attache, portée par la charge à manipuler et adaptée à coopérer avec ce doigt,
- la figure 5 est une vue de détail similaire, mais avec un doigt d'accrochage horizontal comme représenté aux figures 2 et 3,
- la figure 6 est une vue en coupe transversale du train amovible selon la ligne VI-VI de la figure 1,
- la figure 7 en est une vue en coupe axiale selon la ligne VII-VII de la figure 6,
- la figure 8 est une vue de dessus, avec arrachement partiel, du dispositif de commande en braquage et en freinage du train amovible,
- la figure 9 est une vue partielle de dessus d'un autre train amovible, dont les doigts d'accrochage sont transversalement mobiles,
- la figure 10 est une vue de côté du train amovible en configuration de roulage manuel à vide,
- la figure 10A est une vue de côté du même train, mais en appui au sol,
- la figure 11 en est une vue similaire, en configuration de roulage manuel en charge,
- la figure 12 en est une vue similaire, en configuration de roulage motorisé en charge,
- la figure 13 est une vue similaire à celle de la figure 12, mais avec les doigts d'accrochage disposés en position basse,
- la figure 14 est une vue similaire à celle de la figure 12, mais avec les doigts d'accrochage disposés horizontalement,
- la figure 15 est une vue de côté d'une charge avec deux trains amovibles, et
- la figure 16 est une vue de côté d'un convoi de deux trains amovibles.

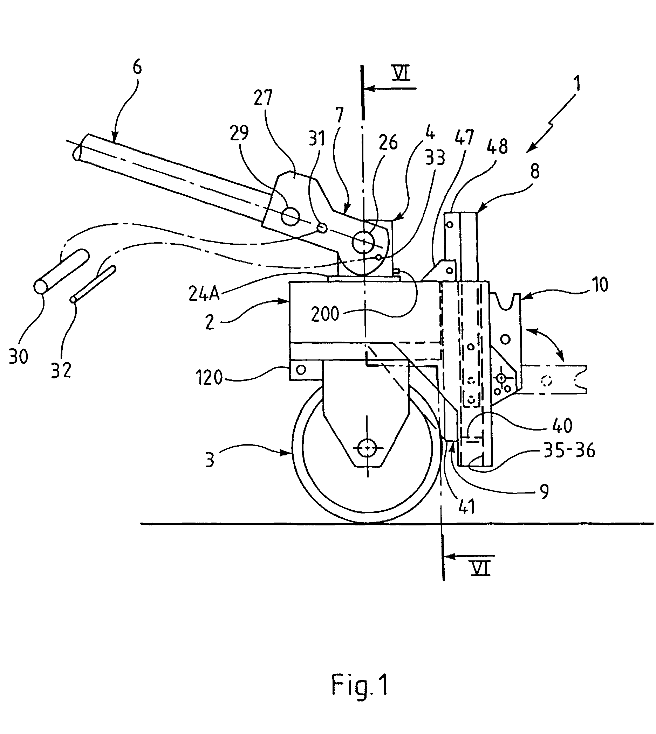

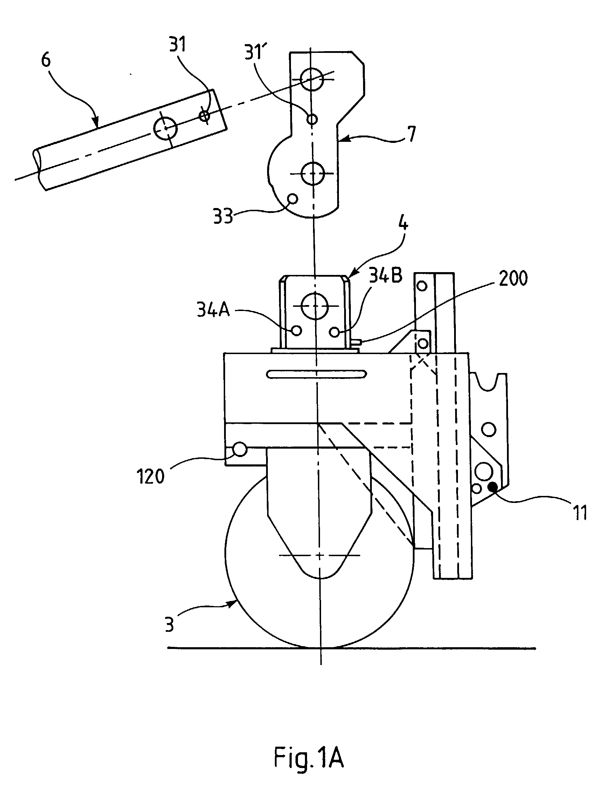

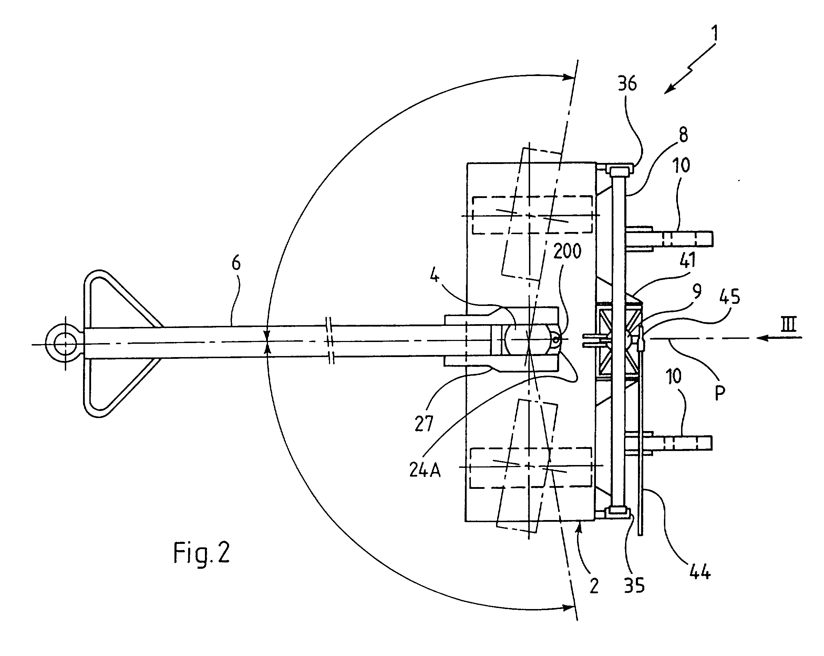

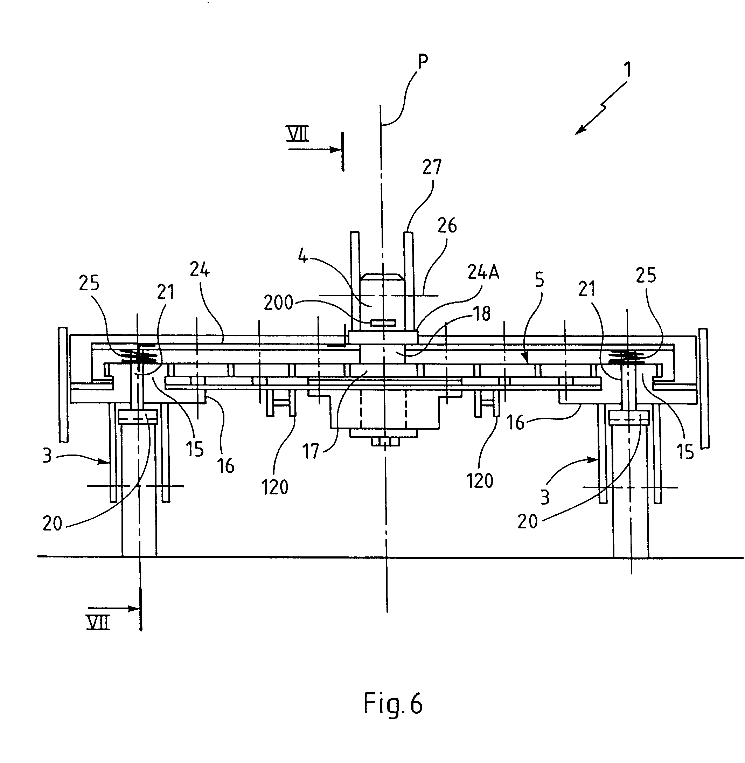

Les figures 1 à 8 représentent un train amovible 1 conforme à l'invention.

Le train amovible 1 comporte un châssis normalement horizontal 2, deux ensembles roulants directeurs 3 montés sous le châssis, un pivot vertical 4, un ensemble d'accouplement 5 coopérant entre les ensembles roulants directeurs 3 et le pivot 4, un timon de direction 6, des moyens 7 adaptés à verrouiller le timon dans une configuration donnée vis-à-vis du pivot, un panneau transversal vertical 8 adapté à coulisser verticalement à l'avant du châssis, un élément de soulèvement 9, des doigts d'accrochage articulés 10 et des moyens amovibles 11 de verrouillage en inclinaison pour ces doigts.

Le châssis 2 est globalement transversal et a, dans l'exemple représenté, la forme d'une boîte dont la paroi supérieure, en pratique amovible, est traversée par le pivot 4 et sous la paroi inférieure de laquelle sont montés les ensembles roulants directeurs 3.

Chaque ensemble roulant directeur 3 comporte une (ou plusieurs) roue(s) dont l'axe horizontal peut tourner autour d'un arbre vertical rotatif grâce auquel il tourillonne par rapport au châssis. Cet arbre comporte un pignon 15 se raccordant à une collerette 16 soutenant la paroi inférieure du châssis.

Les ensembles roulants directeurs sont disposés de façon symétrique de part et d'autre d'un plan vertical central P.

Le pivot vertical 4 est disposé au centre de ce châssis ; en pratique il vient en saillie par rapport à la paroi supérieure du châssis. Il est attelé à un pignon central 17. De préférence un limiteur de couple 18 est engagé entre le pivot et ce pignon central, ce qui permet d'éviter toute détérioration dans le cas où, accidentellement, l'une des roues serait empêchée de suivre l'orientation du timon, par exemple en raison d'un obstacle provoquant un déport latéral. Son réarmement se fait automatiquement en phase au bout d'un tour de rotation du pivot, ce qui évite tout risque de dégradation et supprime toute intervention de maintenance. Le limiteur de couple, de tout type connu approprié, est par exemple vendu par PRUD'HOMME TRANSMISSION à AUBERVILLIERS sous la référence LCBA.

L'accouplement en rotation, de façon synchronisée et avec des amplitudes égales, des pignons 15 à partir du pignon central 17, est effectué ici par deux séries symétriques de pignons 19A, 19B et 19C ; en variante non représentée, cet accouplement peut être assuré par une ou plusieurs chaînes ou courroies, le pignon central étant dédoublé.

Les séries de pignons ont des rapports de transmission égaux, pour garantir le parallélisme des roues à tout instant. Le rapport est positif pour garantir que le pivot et les roues ont des rotations de même sens (cela suppose que les séries de pignons soient impaires). Bien que cela ne soit pas vraiment nécessaire, il est nettement préférable que le rapport de transmission soit égal à +1 de sorte que la position angulaire du pivot soit à tout moment représentative de (parallèle à) celle des roues, ce qui facilite les manoeuvres.

De manière préférée, le train amovible 1 est muni d'un système de freinage.

A cet effet, à titre d'exemple, les ensembles roulants directeurs 3 (voire un seul d'entre-eux dans une version simplifiée) sont chacun munis d'un sabot de freinage 20 comportant une tige verticale 21, coaxiale à l'arbre vertical et donc au pignon 15, et adaptée à coulisser verticalement par rapport à celle-ci pour, par abaissement temporaire, provoquer un freinage à volonté.

Dans le cas représenté où chaque ensemble roulant directeur comporte une seule roue engagée entre deux flasques reliés à la collerette 16, la tige 21 est avantageusement engagée à l'intérieur de l'arbre formé par cette collerette 16 et ce pignon 15.

L'abaissement temporaire de chaque tige 21 et donc des sabots de freinage est assuré par une traverse 24, par exemple de profil en U (ou C) renversé C en sorte de coiffer, par au-dessus et en avant et en arrière, les séries de pignons.

De manière préférée, les tiges sont fixées à la traverse 24 par leurs tranches supérieures pour garantir un bon fonctionnement, et aussi permettre que, pour le rappel des sabots de freinage en configuration haute, il suffise de disposer des éléments élastiques, par exemple des ressorts 25 comprimés entre la face inférieure de la traverse et la face supérieure des pignons 15.

La traverse 24 est accessible de l'extérieur de manière à permettre à un opérateur d'activer le freinage.

A cet effet, le timon 6 est avantageusement articulé sur le pivot 4, autour d'un premier tourillon 26, par l'intermédiaire d'une chape 27 formant came adaptée à appuyer sur la traverse (par exemple sur une surépaisseur annulaire 24A venant en saillie) lorsque le timon s'incline en-dessous d'une inclinaison donnée (sous réserve, voir ci-dessous, qu'à cet instant le timon soit solidaire de la chape, et que par contre la chape puisse tourner par rapport au pivot).

En effet, de manière préférée, lorsque l'on souhaite pouvoir débrayer le freinage dans des configurations où le timon est très abaissé, par exemple pour un tractage motorisé du train, le timon 6 est lui-même articulé sur la chape 27 autour d'un second tourillon horizontal 29, parallèle au tourillon 26, tandis que des moyens de blocage temporaire sont prévus pour, lorsque cela apparaît opportun, solidariser le timon et la chape. Ces moyens de blocage comportent par exemple une goupille 30 adaptée à pénétrer simultanément dans des alésages transversaux 31 et 31' ménagés dans la chape d'une part, et dans le timon, d'autre part.

De même, de manière préférée, des moyens de blocage sont avantageusement prévus pour bloquer sélectivement la chape vis-à-vis du pivot ; ils sont ici formés d'une goupille 32 adaptée à pénétrer dans des alésages transversaux de la chape et du pivot. De manière préférée, comme cela ressortira plus loin, il est intéressant qu'il y ait deux configurations de blocage. C'est pour cela que la chape 7 est munie ici d'un passage transversal 33 adapté à venir en regard, au choix, de l'un ou l'autre de deux perçages transversaux 34A et 34B ménagés sur le pivot à égale distance de l'alésage de l'arbre 26.

En sa partie avant, le châssis comporte deux glissières verticales 35 et 36, avantageusement disposées aux extrémités latérales de cette partie avant. Le panneau vertical 8 est engagé par ses tranches dans ces glissières, par exemple au moyen de galets en saillie latérale.

De manière préférée, des butées 40 sont ménagées sur le châssis, ici dans les glissières, pour définir une configuration d'abaissement minimal.

L'élément de soulèvement 9 ici formé d'un vérin, ou cric, est de préférence disposé au centre de la partie avant. Il est solidaire en sa partie basse (ici le cylindre du vérin) d'une embase 41 solidaire du châssis tandis qu'il est solidaire par sa partie haute du panneau.

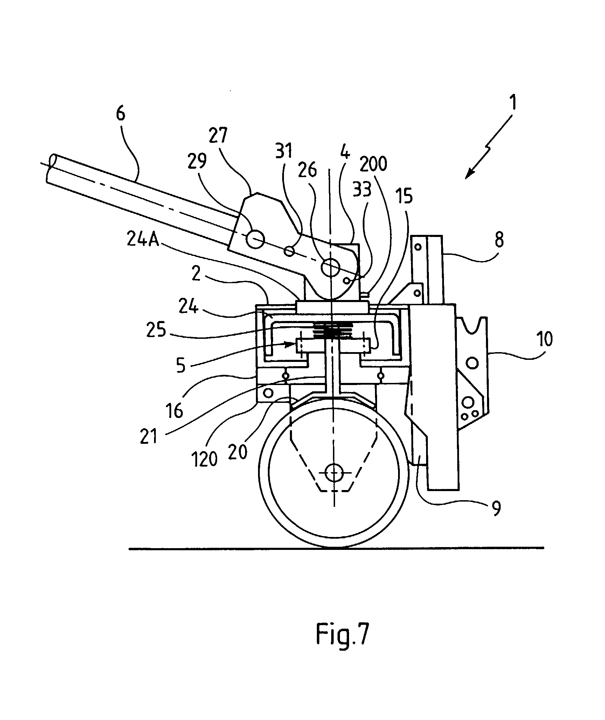

Pour des raisons de résistance mécanique et de minimisation d'encombrement (dans le plan de la figure 1 ou 7) le plateau 8 présente avantageusement une échancrure centrale 42, à la faveur de laquelle vient se loger le cric 9 et dont le fond 43 constitue une portée d'appui pour la tige de ce cric 9.

Le cric comporte avantageusement un levier 44 de manoeuvre manuelle, de préférence détachable vis-à-vis d'un tronçon de liaison 45.

Le cric permet d'ajuster la hauteur du panneau à la montée et la descente ; plusieurs niveaux sont donc possibles.

De manière préférée des moyens de blocage sont prévus pour bloquer le panneau 8 dans une position, voire deux positions, vis-à-vis du châssis. Ces moyens comportent par exemple une goupille adaptée à traverser des perçages ménagés sur le panneau et le châssis, par exemple en position centrale (goupille 46 traversant deux nervures verticales 47 du châssis entre lesquelles coulisse une nervure 48 du plateau) et/ou en position latérale (goupilles 50 coopérant avec des perçages 51 des glissières et des perçages 52 du plateau (ici ménagés dans leurs tranches).

Lorsqu'on veut un blocage à plusieurs niveaux possibles, il est bien sûr équivalent d'avoir plusieurs perçages dans le panneau et un perçage dans le châssis, ou l'inverse.

Les doigts d'accrochage articulés 10 sont à l'avant du panneau, autour de tourillons horizontaux coaxiaux 60 engagés chacun entre deux flasques verticaux, les moyens de verrouillage en inclinaison 11 étant prévus pour bloquer les doigts en au moins deux configurations de travail d'inclinaisons différentes.

Par analogie avec ce qui précède, les moyens de verrouillage comportent avantageusement des goupilles 11 adaptées à pénétrer à la fois dans des alésages de l'un au moins des flasques et du doigt considéré ; il y a ici deux alésages dans chaque flasque pour un alésage dans chaque doigt mais l'inverse est tout aussi efficace pour un blocage en deux positions.

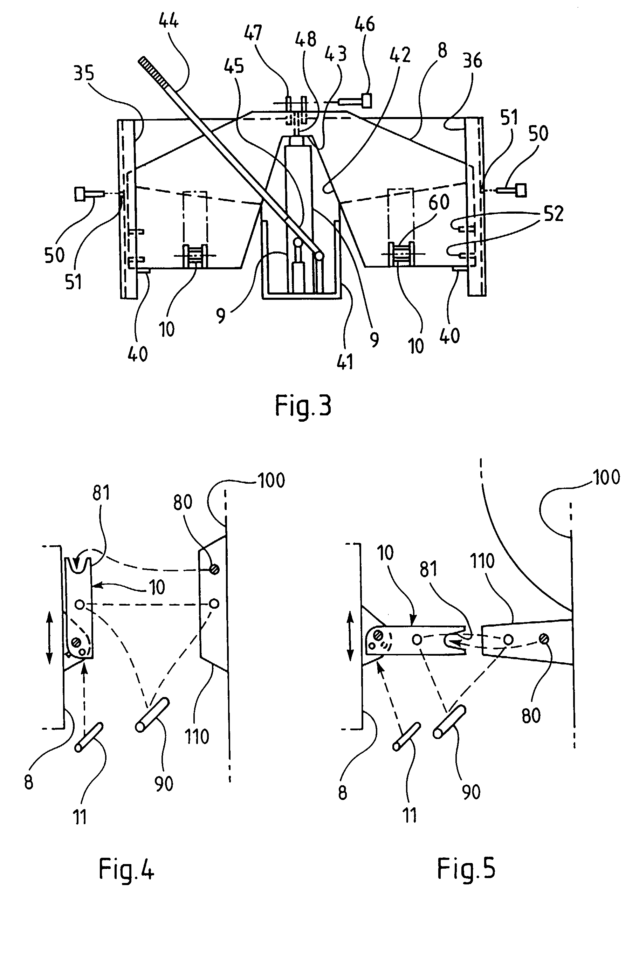

Les deux configurations de travail des doigts (mais il peut y en avoir plus) sont avantageusement horizontale et verticale (les doigts sont horizontaux aux figures 1 (pointillés), 2, 3, 5, tandis qu'ils sont verticaux aux figures 1, 3 (pointillés), 4, 7).

A la figure 3, il apparaît que les doigts d'accrochage n'ont qu'un mouvement possible (rotation autour des tourillons).

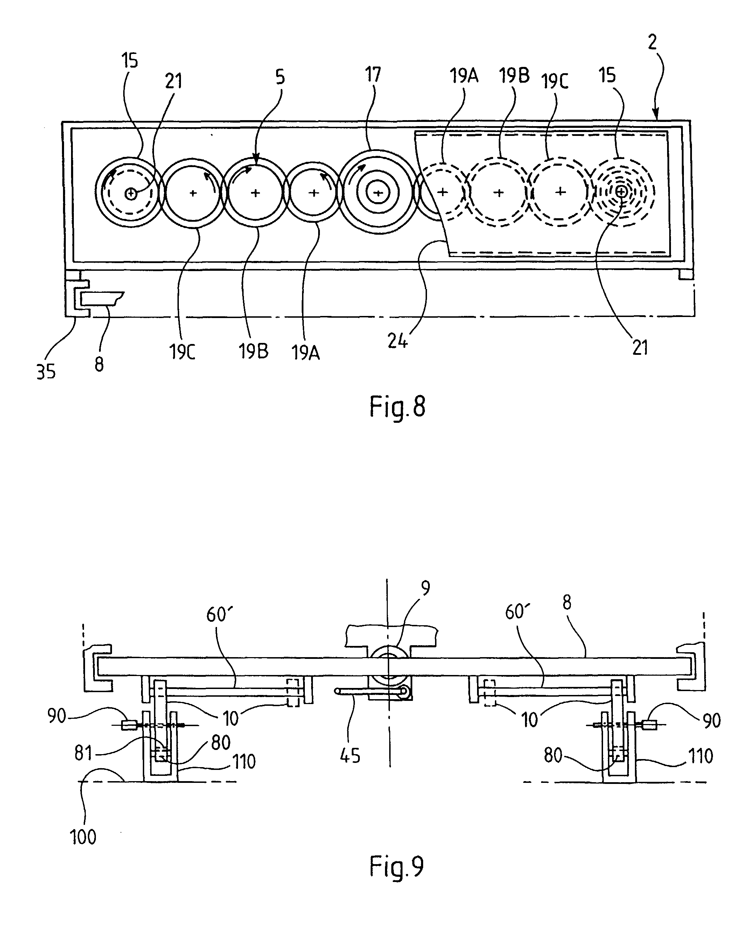

A la figure 9, il apparaît que les doigts d'accrochage ont en outre une possibilité de translation latérale, le long des tiges horizontales 60' formant tourillons, dont la longueur détermine la course de translation. Le blocage des doigts se fait alors en l'une ou l'autre des extrémités des tourillons, avec mise à profit du seul flasque tenant cette extrémité. Les deux configurations de travail peuvent se distinguer à la fois par une différence d'inclinaison et par une différence d'écartement (position représentée : configuration horizontale + écartement maximal ; position en tiretés : configuration verticale + écartement minimal).

Un verrouillage en une position intermédiaire est bien sûr possible, par exemple par un talon du doigt venant en appui sous un épaulement du châssis (il en résulte un verrouillage dans un seul sens, celui de l'abaissement des doigts à partir, selon la position de l'épaulement, d'une position horizontale, verticale, voire intermédiaire).

Les doigts d'accrochage 10 sont adaptés à coopérer simultanément avec des organes d'accrochage 110 fixés à l'extrémité de la charge 100 que l'on souhaite déplacer (il faut bien sûr qu'à ce moment il y ait le même écartement transversal entre doigts 10 et organes 110).

Cette coopération se fait par exemple par venue en butée d'un barreau 80 (ici porté par les organes 110) au fond d'une fourche 81 (ici ménagée au bout de chaque doigt 10).

Des moyens amovibles d'assujettissement sont prévus pour solidariser temporairement lesdits organes d'accrochage 110 auxdits doigts d'accrochage. Il s'agit par exemple de goupilles 90 traversant des alésages à la fois des doigts et des organes lorsque ces derniers sont en butée.

De manière préférée, chaque train amovible comporte lui-même, en sa partie arrière, c'est-à-dire à l'opposé du panneau transversal vertical, des organes d'accrochage 120, adaptés à coopérer avec les doigts d'accrochage d'un autre train pour former un convoi. Ces organes 120 sont ici horizontaux mais peuvent bien sûr, en variante, être verticaux.

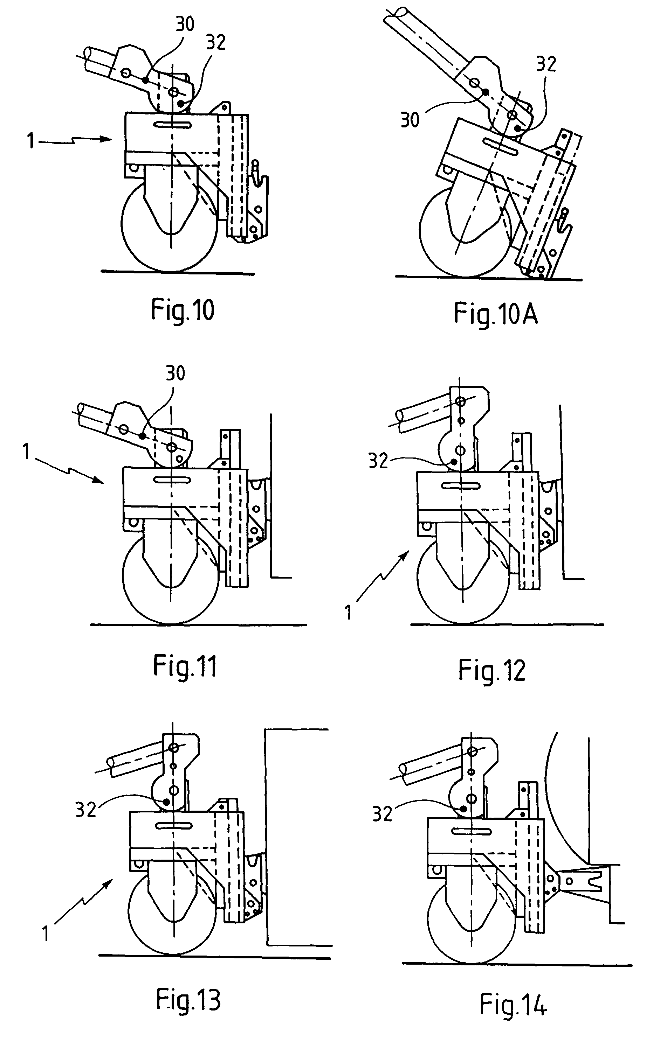

La comparaison des figures 4 et 5 (cela est vrai aussi de la comparaison des figures 12 et 14) montrent que la configuration horizontale des doigts et organes d'accrochage peut avoir pour avantage de permettre l'accrochage d'une charge à fond bombé.

Les figures 10 à 16 représentent plusieurs configurations d'usage d'un train conforme à l'invention.

Aux figures 10 et 10A, les goupilles 30 et 32 de la figure 1 sont en place (goupille 32 dans le perçage 34B de la figure 1A). Le timon est solidaire du châssis par l'intermédiaire de la chape ; l'inclinaison du châssis par rapport au sol est déterminée par celle du timon. Lorsque cette inclinaison est nulle, cette configuration est appropriée pour un roulage à vide (figure 10), ou pour un appui au sol, par l'intermédiaire du panneau vertical préalablement amené en une configuration basse (configuration d'attente de la figure 10A).

A la figure 11 le timon et la chape sont solidaires (goupille 30 en place) mais la chape est libre vis-à-vis du pivot. Cette configuration est appropriée pour un roulage manuel ; il suffit de laisser tomber le timon pour activer le freinage.

Les figures 12 à 14 représentent une configuration où le timon est libre vis-à-vis de la chape tandis que celle-ci est solidaire du pivot (goupille en place, engagée cette fois-ci dans le perçage 34A). Cette configuration est appropriée pour un tractage motorisé, le freinage étant empêché quelle que soit l'inclinaison du timon.

En variante non représentée, sous réserve de prévoir un deuxième perçage transversal soit dans le timon soit dans la chape, on peut solidariser le timon et la chape dans une configuration coudée telle que, par analogie avec la figure 11 (donc sans la goupille 32), il y ait un freinage automatique en cas de rupture de l'attelage.

Les figures 12 et 13 correspondent à des niveaux différents pour la charge avec par exemple des gardes au sol respectivement égales à 130 et 35 mm.

La figure 14 montre l'intérêt de la configuration horizontale des doigts qui permettent en effet l'accrochage d'une charge à fond bombé.

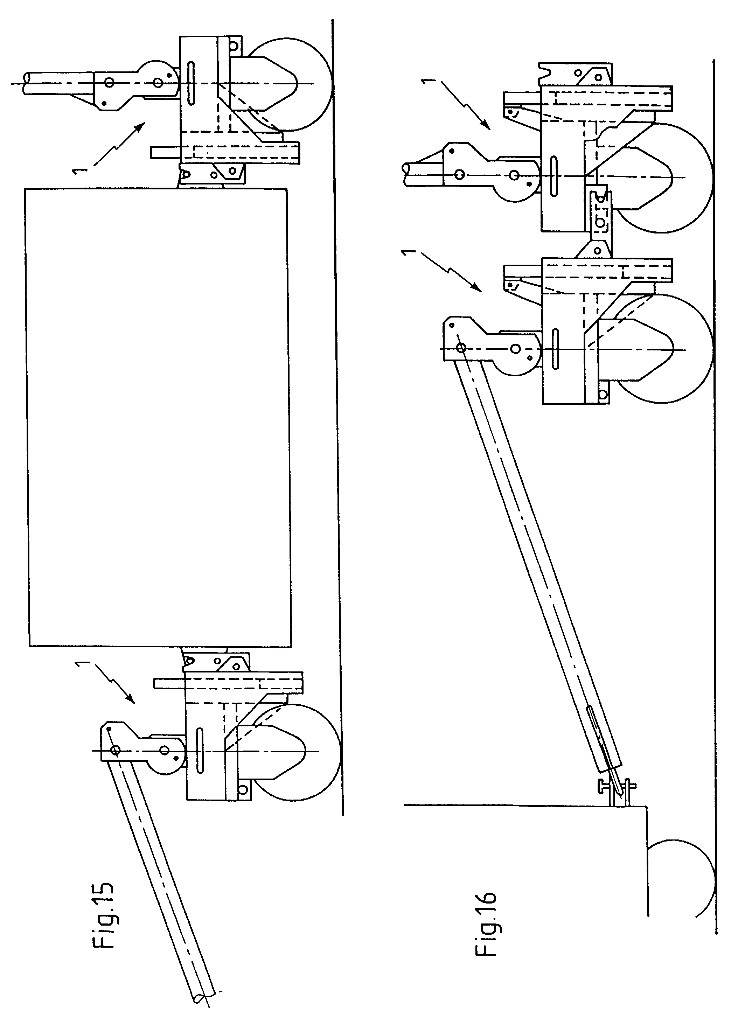

La figure 15 donne un exemple de configuration pour une charge en cours de tractage motorisé. Le train de gauche est dans la configuration de la figure 12 tandis que le train de droite a son timon rendu rigide vis-à-vis du châssis (mise en place de la goupille 32 en 34A, et de la goupille 30). De plus, ce train de droite (qui est à l'arrière par rapport au sens de la marche) est de préférence bloqué en rotation de braquage, par exemple au moyen d'une goupille pénétrant dans des alésages verticaux d'une oreille horizontale du pivot (référence 200 des figures 1, 1A, 2 et 6) et de la surépaisseur 24A de la traverse 24.

La figure 16 représente deux trains attelés en un convoi tracté de façon motorisée. Il est bien sûr possible de prévoir des convois contenant un nombre quelconque de trains.

Il est à noter que le train de l'invention est facile à ranger à vide (outre la configuration d'attente de la figure 10A) : il suffit de l'accrocher en configuration verticale à un mur muni à sa base d'organes d'accrochage.

Il va de soi que la description qui précède n'a été proposée qu'à titre d'exemple non limitatif et que de nombreuses variantes peuvent être proposées par l'homme de l'art sans sortir du cadre de l'invention.

On appréciera que le train de l'invention permet un verrouillage de la charge, son soulèvement grâce au cric, jusqu'à un quelconque niveau souhaité, son guidage selon une trajectoire (y compris transversalement ce qui est rendu possible par l'usage de pignons qui permet de dépasser un angle de braquage de 90°), dans de très bonnes conditions de stabilité et de sécurité ; la mise en oeuvre de ce train est aisée et, surtout en prenant le mode de réalisation de la figure 9, il y a une grande variété de charges susceptibles d'être manutentionnées avec un tel train.

## Revendications

1. Système pour l'accrochage, le verrouillage, le soulèvement, le roulage directif, la dépose et la libération d'une charge (100), comportant, pour l'une au moins de deux extrémités de la charge décalées selon une direction longitudinale :
- un train amovible (1) comportant un châssis (2) normalement horizontal, deux ensembles roulants directeurs (3) montés sous le châssis, en lui étant reliés par deux arbres verticaux rotatifs respectifs (15) situés en deux positions décalées transversalement, un pivot vertical (4) monté sur le châssis entre les arbres verticaux, un ensemble d'accouplement (5) attelant en rotation et en synchronisme les arbres verticaux au pivot vertical, et un timon de direction (6) articulé sur le pivot autour d'un tourillon horizontal (26), caractérisé par des moyens (7, 27, 30, 32) adaptés à verrouiller de façon temporaire le timon en une configuration donnée vis-à-vis du pivot, un panneau transversal vertical (8) monté coulissant verticalement à l'avant du châssis, un vérin vertical (9) interposé entre une partie basse (41) du châssis et une partie haute (43) du panneau, deux doigts d'accrochage (10) articulés à l'avant du panneau transversal vertical autour de tourillons horizontaux transversaux coaxiaux, des moyens amovibles de verrouillage en inclinaison (11) pour verrouiller ces doigts dans chacune d'au moins deux configurations de travail d'inclinaison différentes autour de ces tourillons coaxiaux,
- deux organes d'accrochage (110) fixés à ladite extrémité de la charge adaptés à coopérer simultanément avec lesdits doigts d'accrochage du train amovible dans l'une de leurs configurations de travail,
- des moyens amovibles d'assujettissement (90) adaptés à solidariser temporairement lesdits organes d'accrochage auxdits doigts d'accrochage.

2. Système selon la revendication 1, caractérisé en ce que les deux arbres verticaux rotatifs respectifs des ensembles roulants directeurs (3), ainsi que le pivot vertical (4) comportent des pignons (15, 17) attelés en rotation par ledit ensemble d'accouplement (5).

3. Système selon la revendication 2, caractérisé en ce que ledit ensemble d'accouplement comporte deux séries symétriques de pignons (19A, 19B, 19C) de mêmes rapports de transmission, interposés entre le pignon du pivot et les pignons, identiques, des arbres verticaux.

4. Système selon la revendication 3, caractérisé en ce que lesdites séries de pignons ont chacune un rapport de transmission égal à +1.

5. Système selon l'une quelconque des revendications 2 à 4, caractérisé en ce que lesdits pignons sont situés dans une partie du châssis formant boîtier.

6. Système selon l'une quelconque des revendications 1 à 5, caractérisé en ce que l'un au moins des ensembles roulants directeurs (3) est muni d'un sabot de freinage (20) comportant une tige verticale (21) coaxiale à l'arbre vertical dudit ensemble roulant directeur et montée verticalement coulissante vis-à-vis de cet arbre, et d'une pièce de commande de freinage (24), accessible à l'extérieur du châssis et adaptée à pousser temporairement la tige vers le bas par rapport à l'arbre.

7. Système selon la revendication 6, caractérisé en ce que chacun des ensembles roulants directeurs (3) est muni d'un sabot (20) comportant une tige, une unique pièce de manoeuvre (24) étant prévue pour pousser simultanément sur les deux tiges, constituée d'une traverse à laquelle sont fixées lesdites tiges.

8. Système selon la revendication 7, caractérisé en ce que des éléments élastiques (25) sont comprimés entre lesdits arbres et ladite traverse.

9. Système selon la revendication 8, caractérisé en ce que le timon (6) est articulé sur le pivot (4) au moyen d'une chape (27), adaptée à être solidarisée au moins temporairement au timon, et coopérant avec la traverse (24) en sorte de la solliciter vers le bas lorsque le timon descend sous une inclinaison donnée par rapport au sol.

10. Système selon l'une quelconque des revendications 6 à 9, caractérisé en ce que les ensembles roulants directeurs (3) comportent chacun une seule roue et la tige verticale (21) est montée à l'intérieur de l'arbre vertical (15).

11. Système selon l'une quelconque des revendications 1 à 10, caractérisé en ce que le timon est articulé sur le pivot (4) par l'intermédiaire d'une chape (27) sur laquelle le timon est articulé autour d'un second tourillon horizontal (29), des moyens de blocage (30, 32) étant prévus pour solidariser de manière temporaire, soit seulement le timon à la chape, soit seulement la chape au pivot, soit le timon à la chape et cette chape au pivot.

12. Système selon la revendication 11, ces moyens de blocage comportent de premiers perçages transversaux ménagés en regard dans le timon (6) et la chape (27), de seconds perçages transversaux ménagés en regard dans la chape et le pivot (4), et des goupilles (30, 32) adaptées à s'engager dans ces premiers perçages et/ou dans ces seconds passages.

13. Système selon l'une quelconque des revendications 1 à 12, caractérisé en ce que des moyens de blocage (46, 50) sont prévus pour bloquer le panneau transversal vertical en au moins deux positions verticales vis-à-vis du châssis.

14. Système selon la revendication 13, caractérisé en ce que le panneau transversal vertical est monté dans des glissières verticales (35, 36) situées aux extrémités latérales avant du châssis, et lesdits moyens de blocage comportent des goupilles (46, 50) adaptées à pénétrer à la fois dans des perçages horizontaux des glissières et des perçages horizontaux du panneau transversal vertical.

15. Système selon l'une quelconque des revendications 1 à 14, caractérisé en ce que les moyens amovibles de verrouillage en inclinaison comportent des goupilles (11) adaptées à pénétrer à la fois dans des perçages horizontaux des doigts d'accrochage (10) et dans des perçages horizontaux ménagés dans au moins un flasque vertical ménagé sur le panneau et sur lequel est fixé le tourillon horizontal dudit doigt.

16. Système selon l'une quelconque des revendications 1 à 15, caractérisé en ce que les doigts d'accrochage (10) sont mobiles transversalement le long de leurs tourillons horizontaux.

17. Système selon l'une quelconque des revendications 1 à 16, caractérisé en ce que les doigts d'accrochage ont une configuration horizontale de travail et une configuration verticale de travail.

18. Système selon l'une quelconque des revendications 1 à 17, caractérisé en ce que chaque doigt d'accrochage (10) coopère avec un organe d'accrochage (110) par venue d'un barreau (80) en butée au fond d'une fourche (81) en une configuration où ce doigt et cet organe présentent des perçages transversalement en regard, les moyens amovibles d'assujettissement comportant des goupilles (90) engagées à la fois dans lesdits perçages du doigt et de l'organe d'accrochage.

19. Système selon la revendication 18, caractérisé en ce que la fourche (81) est montée à l'extrémité du doigt d'accrochage tandis que le barreau (80) fait partie de l'organe d'accrochage.

20. Système selon l'une quelconque des revendications 1 à 19, caractérisé en ce que le train amovible comporte lui-même, à l'opposé du panneau transversal vertical des organes d'accrochage (120), adaptés à coopérer avec les doigts d'accrochage d'un autre train amovible.

## Patentansprüche

1. System zum Anhängen, Verriegeln, Heben, lenkbaren Rollen, Absetzen und zur Freigabe einer Last (100), das für mindestens eines der beiden Enden der Last, die entlang einer Longitudinalrichtung versetzt sind, folgendes aufweist:
- ein bewegliches Fahrgestell (1), aufweisend eine Chassis (2), welche normalerweise horizontal ist, zwei Roll-Lenkeinheiten (3), die unter der Chassis angebracht sind, wobei sie durch zwei jeweilige vertikale Drehachsen (15) mit ihr verbunden sind, welche sich an zwei transversal versetzten Positionen befinden, einen vertikalen Drehzapfen (4), der auf der Chassis zwischen den vertikalen Achsen angebracht ist, eine Kupplungseinheit (5), die die vertikalen Wellen drehend und synchron an den vertikalen Drehzapfen kuppelt, und einen Lenkhebel (6), der auf dem Drehzapfen um einen horizontalen Lagerzapfen (26) herum gelenkig angebracht ist, gekennzeichnet durch Mittel (7, 27, 30, 32), die dafür ausgelegt sind, den Hebel zeitweilig in einer gegebenen Konfiguration gegenüber dem Drehzapfen zu verriegeln, eine transversale vertikale Platte (8), die vertikal verschiebbar auf der Vorderseite der Chassis angebracht ist, einen vertikalen Zylinder (9), der zwischen einen unteren Teil (41) der Chassis und einen oberen Teil (43) der Platte gesetzt ist, zwei Anhängefinger (10), die auf der Vorderseite der transversalen vertikalen Platte um horizontale transversale koaxiale Lagerzapfen herum gelenkig angebracht sind, bewegliche Mittel (11) zum Verriegeln in geneigter Stellung, um diese Finger in jeder von mindestens zwei verschiedenen Arbeitskonfigurationen geneigter Stellung um diese koaxialen Lagerzapfen herum zu verriegeln,
- zwei Anhängeorgane (110), die an dem Ende der Last befestigt sind und dafür ausgelegt sind, gleichzeitig mit den Anhängefingern des beweglichen Fahrgestells in einer ihrer Arbeitskonfigurationen zusammenzuwirken,
- bewegliche Befestigungsmittel (90), die dafür ausgelegt sind, zeitweise die Anhängeorgane mit den Anhängefingern zu vereinigen.

2. System nach Anspruch 1, dadurch gekennzeichnet, daß die beiden jeweiligen vertikalen Drehachsen der Roll-Lenkeinheiten (3) sowie der vertikale Drehzapfen (4) Ritzel (15, 17) aufweisen, die durch die Kupplungseinheit (5) drehgekuppelt sind.

3. System nach Anspruch 2, dadurch gekennzeichnet, daß die Kupplungseinheit zwei symmetrische Folgen von Ritzeln (19A, 19B, 19C) mit denselben Übersetzungsverhältnissen aufweist, die zwischen das Ritzel des Drehzapfens und die identischen Ritzel der vertikalen Achsen gesetzt sind.

4. System nach Anspruch 3, dadurch gekennzeichnet, daß die Folgen von Ritzeln jeweils ein Übersetzungsverhältnis aufweisen, das gleich +1 ist.

5. System nach einem der vorstehenden Ansprüche 2 bis 4, dadurch gekennzeichnet, daß sich die Ritzel in einem Teil der Chassis befinden, der ein Gehäuse bildet.

6. System nach einem der Ansprüche 1 bis 5, dadurch gekennzeichnet, daß mindestens eine der Roll-Lenkeinheiten (3) mit einem Bremsschuh (20), welcher eine vertikale Stange (21) aufweist, die koaxial zur vertikalen Achse der Roll-Lenkeinheit ist und vertikal verschiebbar gegenüber dieser Achse angebracht ist, und mit einem Bremssteuerungsglied (24) ausgestattet ist, das von der Außenseite der Chassis aus zugänglich ist und dafür ausgelegt ist, zeitweilig die Stange in bezug auf die Achse nach unten zu drücken.

7. System nach Anspruch 6, dadurch gekennzeichnet, daß jede der Roll-Lenkeinheiten (3) mit einem Schuh (20) ausgestattet ist, der mit einer Stange ausgestattet ist, wobei ein einzelnes Betätigungsglied (24) vorhanden ist, um gleichzeitig auf die beiden Stangen zu drücken, das von einem Bügel gebildet wird, an dem die Stangen befestigt sind.

8. System nach Anspruch 7, dadurch gekennzeichnet, daß elastische Elemente (25) zwischen den Achsen und dem Bügel komprimiert sind.

9. System nach Anspruch 8, dadurch gekennzeichnet, daß der Hebel (6) am Drehzapfen (4) mittels eines Gabelgelenks (27) gelenkig angebracht ist, das dafür ausgelegt ist, zumindest zeitweilig mit dem Hebel vereinigt zu werden, und das mit dem Bügel (24) zusammenwirkt, um diesen nach unten zu belasten, wenn der Hebel unter eine Neigungsstellung absinkt, die in bezug auf den Boden gegeben ist.

10. System nach einem der Ansprüche 6 bis 9, dadurch gekennzeichnet, daß die Roll-Lenkeinheiten (3) jeweils ein einzelnes Rad aufweisen und daß die vertikale Stange (21) im Inneren der vertikalen Achse (15) angebracht ist.

11. System nach einem der Ansprüche 1 bis 10, dadurch gekennzeichnet, daß der Hebel auf dem Drehzapfen (4) durch ein Gabelgelenk (27) gelenkig angebracht ist, auf dem der Hebel um einen zweiten horizontalen Lagerzapfen (29) herum gelenkig angebracht ist, wobei Sperrmittel (30, 32) vorhanden sind, um zeitweilig entweder allein den Hebel mit der Gelenkgabel oder allein die Gelenkgabel mit dem Drehzapfen oder den Hebel mit der Gelenkgabel und diese Gelenkgabel mit dem Drehzapfen zu vereinigen.

12. System nach Anspruch 11, wobei diese Sperrmittel erste transversale Bohrungen, die einander gegenüberliegend im Hebel (6) und in der Gelenkgabel (27) ausgebildet sind, zweite transversale Bohrungen, die einander gegenüberliegend in der Gelenkgabel und dem Drehzapfen (4) ausgebildet sind, und Stifte (30, 32) aufweisen, die dafür ausgelegt sind, in diese ersten Bohrungen und/oder in diese zweiten Durchgänge einzugreifen.

13. System nach einem der Ansprüche 1 bis 12, dadurch gekennzeichnet, daß die Sperrmittel (46, 50) dafür vorgesehen sind, die transversale vertikale Platte in mindestens zwei vertikalen Positionen gegenüber der Chassis zu sperren.

14. System nach Anspruch 13, dadurch gekennzeichnet, daß die transversale vertikale Platte in vertikalen Laufschienen (35, 36) angebracht ist, welche sich an den seitlichen Enden vor der Chassis befinden, und daß die Sperrmittel Stifte (46, 50) aufweisen, die dafür ausgelegt sind, gleichzeitig in horizontale Bohrungen der Laufschienen und in horizontale Bohrungen der transversalen vertikalen Platte hinein vorzudringen.

15. System nach einem der Ansprüche 1 bis 14, dadurch gekennzeichnet, daß die beweglichen Mittel zur Verriegelung in geneigter Stellung Stifte (11) aufweisen, die dafür ausgelegt sind, gleichzeitig in horizontale Bohrungen der Anhängefinger (10) und in horizontale Bohrungen einzudringen, welche in mindestens einem horizontalen Flansch ausgebildet sind, der auf der Platte ausgebildet ist und auf dem der horizontale Lagerzapfen des Fingers befestigt ist.

16. System nach einem der Ansprüche 1 bis 15, dadurch gekennzeichnet, daß die Anhängefinger (10) transversal entlang ihren horizontalen Lagerzapfen beweglich sind.

17. System nach einem der Ansprüche 1 bis 16, dadurch gekennzeichnet, daß die Anhängefinger eine horizontale Arbeitskonfiguration und eine vertikale Arbeitskonfiguration aufweisen.

18. System nach einem der Ansprüche 1 bis 17, dadurch gekennzeichnet, daß jeder Anhängefinger (10) mit einem Anhängeorgan (110) über einen Stab (80) zusammenwirkt, der in einer Konfiguration, in der dieser Finger und dieses Organ einander transversal gegenüberstehende Bohrungen zeigen, gegen den Boden einer Gabel (81) anliegt, wobei die beweglichen Kupplungsmittel Stifte (90) aufweisen, die gleichzeitig in den Bohrungen des Fingers und des Anhängeorgans in Eingriff sind.

19. System nach Anspruch 18, dadurch gekennzeichnet, daß die Gabel (81) am Ende des Anhängefingers angebracht ist, während der Stab (80) Teil des Anhängeorgans ist.

20. System nach einem der Ansprüche 1 bis 19, dadurch gekennzeichnet, daß das bewegliche Fahrgestell seinerseits gegenüber der transversalen vertikalen Platte Anhängeorgane (120) aufweist, die dafür ausgelegt sind, mit den Anhängefingern eines anderen beweglichen Fahrgestells zusammenzuwirken.

## Claims

1. System for the attachment, locking, lifting, directional carriage, placing down and release of a load (100), including, for at least one of two ends of the load offset in a longitudinal direction:
- a removable wheel set (1) including a normally horizontal chassis (2), two steering running assemblies (3) mounted underneath the chassis, being connected to it by two respective rotating vertical shafts (15) situated at two transversely offset positions, a vertical pivot (4) mounted on the chassis between the vertical shafts, a coupling assembly (5) rotatably coupling the vertical shafts to the vertical pivot in synchronism, and a steering pole (6) articulated on the pivot about a horizontal journal (26), characterised by means (7, 27, 30, 32) adapted to temporarily lock the pole in a given configuration vis-à-vis the pivot, a vertical transverse panel (8) mounted so as to slide vertically in front of the chassis, a vertical jack (9) interposed between a bottom part (41) of the chassis and a top part (43) of the panel, two attachment fingers (10) articulated at the front of the vertical transverse panel about coaxial transverse horizontal journals, removable means for locking with respect to inclination (11) in order to lock these fingers in each of at least two working configurations with different inclinations about these coaxial journals,
- two attachment members (110) fixed to the said end of the load adapted to cooperate simultaneously with the said attachment fingers for the removable wheel set in one of the working configurations,
- removable fixing means (90) adapted to temporarily secure the said attachment members to the said attachment fingers.

2. System according to Claim 1, characterised in that the two respective rotating vertical shafts of the steering running assemblies (3), and the vertical pivot (4), have gears (15, 17) coupled with respect to rotation by the said coupling assembly (5).

3. System according to Claim 2, characterised in that the said coupling assembly includes two symmetrical series of gears (19A, 19B, 19C) with the same transmission ratio, interposed between the gear of the pivot and the identical gears of the vertical shafts.

4. System according to Claim 3, characterised in that the said series of gears each have a transmission ratio equal to +1.

5. System according to any one of Claims 2 to 4, characterised in that the said gears are situated in a part of the chassis forming a housing.

6. System according to any one of Claims 1 to 5, characterised in that at least one of the steering running assemblies (3) is provided with a braking shoe (20) having a vertical rod (21) coaxial with the vertical shaft of the said steering running assembly and mounted so as to slide vertically vis-à-vis this shaft, and a braking control part (24), accessible outside the chassis and adapted to temporarily push the rod downwards with respect to the shaft.

7. System according to Claim 6, characterised in that each of the steering running assemblies (3) is provided with a shoe (20) having a rod, a single manoeuvring part (24) being provided to simultaneously push on the two rods, consisting of a cross-member to which the said rods are fixed.

8. System according to Claim 7, characterised in that resilient members (25) are compressed between the said shafts and the said cross-member.

9. System according to Claim 8, characterised in that the pole (6) is articulated on the pivot (4) by means of a fork joint (27), adapted to be fixed at least temporarily to the pole, and cooperating with the cross-member (24) so as to force it downwards when the pole drops below a given inclination with respect to the ground.

10. System according to any one of Claims 6 to 9, characterised in that the steering running assemblies (3) each have a single wheel and the vertical rod (21) is mounted inside the vertical shaft (15).

11. System according to any one of Claims 1 to 10, characterised in that the pole is articulated on the pivot (4) by means of a fork joint (27) on which the pole is articulated about a second horizontal journal (29), locking means (30, 32) being provided to temporarily fix either only the pole to the fork joint, or only the fork joint to the pivot, or the pole to the fork joint and this fork joint to the pivot.

12. System according to Claim 11, these locking means including first transverse drillings provided opposite in the pole (6) and fork joint (27), second transverse drillings provided opposite in the fork joint and pivot (4), and pins (30, 32) adapted to engage in these first drillings and/or in these second passages.

13. System according to any one of Claims 1 to 12, characterised in that locking means (46, 50) are provided to lock the vertical transverse panel in at least two vertical positions vis-à-vis the chassis.

14. System according to Claim 13, characterised in that the vertical transverse panel is mounted in vertical runners (35, 36) situated at the front lateral ends of the chassis, and the said locking means include pins (46, 50) adapted to enter both horizontal drillings in the runners and horizontal drillings in the vertical transverse panel.

15. System according to any one of Claims 1 to 14, characterised in that the removable means for locking with respect to inclination include pins (11) adapted to enter both horizontal drillings in the attachment fingers (10) and horizontal drillings provided in at least one vertical plate provided on the panel and to which the horizontal journal of the said finger is fixed.

16. System according to any one of Claims 1 to 15, characterised in that the attachment fingers (10) are able to move transversely along their horizontal journals.

17. System according to any one of Claims 1 to 16, characterised in that the attachment fingers have a horizontal working configuration and a vertical working configuration.

18. System according to any one of Claims 1 to 17, characterised in that each attachment finger (10) cooperates with an attachment member (110) by means of a bar (80) coming into abutment at the bottom of a fork (81) in a configuration where this finger and this member have drillings transversely opposite, the removable fixing means including pins (90) engaged both in the said drillings in the finger and in the attachment member.

19. System according to Claim 18, characterised in that the fork (81) is mounted at the end of the attachment finger whilst the bar (80) forms part of the attachment member.

20. System according to any one of Claims 1 to 19, characterised in that the removable wheel set itself has, opposite the vertical transverse panel, attachment members (120), adapted to cooperate with the attachment fingers of another removable wheel set.
